# EUROPEAN PATENT APPLICATION

(11) **EP 4 848 818 A1**
(43) Date of publication of application: **02.12.2026**
(21) Application number: 25769756.5
(22) Date of filing: 14.03.2025
(51) Int. Cl.: H04W 36/08

(54) **INFORMATION TRANSMISSION METHOD, DEVICE, AND STORAGE MEDIUM**

(30) Priority: 15.03.2024 CN 202410309493
(71) Applicant: Honor Device Co., Ltd., Shenzhen, Guangdong 518040 (CN)
(72) Inventor: TANG, Xiaoxuan, Shenzhen, Guangdong 518040 (CN)
(74) Representative: Isarpatent
(86) International application number: PCT/CN2025/082535
(87) International publication number: WO 2025/190378

(57) **Abstract**

Embodiments of this application provide an information transmission method, a device, and a storage medium. The method includes: sending related information of conditional handover. The conditional handover is conditional handover with candidate master and secondary cell groups. In the foregoing solution, a terminal device sends related information of conditional handover to a network device, so that the network device can determine a problem in a conditional handover process based on the related information of the conditional handover, thereby resolving the problem and improving communication quality.

## Description

This application claims priority to Chinese Patent Application No. 202410309493.0, filed with the China National Intellectual Property Administration on March 15, 2024 and entitled "INFORMATION TRANSMISSION METHOD, DEVICE, AND STORAGE MEDIUM", which is incorporated herein by reference in its entirety.

### TECHNICAL FIELD

This application relates to the field of communication technologies, and in particular, to an information transmission method, a device, and a storage medium.

### BACKGROUND

In the field of communication technologies, a terminal device maintains a stable communication connection in a movement process by performing cell handover, to avoid a communication problem caused by signal quality deterioration or interruption.

Specifically, a network device sends an execution condition to the terminal device, and when the execution condition is satisfied, the terminal device performs cell handover.

However, in a process of performing cell handover, there is a problem that a communication link is interrupted due to a handover failure, resulting in poor communication reliability. Therefore, how to improve the communication reliability is an urgent problem to be resolved.

### SUMMARY

Embodiments of this application provide an information transmission method, a device, and a storage medium, which are applied to the field of communication technologies. A terminal device sends related information of conditional handover to a network device, so that the network device can determine a problem in a conditional handover process based on the related information of the conditional handover, thereby resolving the problem and improving communication quality.

According to a first aspect, an embodiment of this application provides an information transmission method. The method includes: sending related information of conditional handover. The conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for a terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the method further includes: sending a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the method further includes: recording the related information based on first configuration information and/or predefined information.

In a possible implementation, the first configuration information includes at least one of the following: a recording period; a recording start moment; a recording end moment; and timer information of a second timer.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the method further includes: sending third indication information. The third indication information is used to indicate whether the related information exists in the terminal device.

In a possible implementation, the sending third indication information includes: sending a first message. The first message includes the third indication information. The first message includes at least one of the following: a radio resource control RRC setup complete message, an RRC reconfiguration complete message, and an RRC resume complete message.

In a possible implementation, the sending related information of conditional handover includes: receiving a reporting indication, and sending the related information based on the reporting indication; sending the related information when a preconfigured trigger condition is satisfied; or sending the related information based on a preset period.

In a possible implementation, the trigger condition includes at least one of the following: Start duration of the second timer is greater than or equal to a preset threshold; and a radio link failure occurs.

According to a second aspect, an embodiment of this application provides an information transmission method, applied to a network device and including: receiving related information of conditional handover. The conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for a terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the method further includes: receiving a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the related information is obtained through recording based on first configuration information and/or predefined information.

In a possible implementation, the first configuration information includes at least one of the following: a recording period; a recording start moment; a recording end moment; and timer information.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the method further includes: receiving third indication information. The third indication information is used to indicate whether the related information exists in the terminal device.

In a possible implementation, the method further includes: receiving a first message. The first message includes the third indication information. The first message includes at least one of the following: a radio resource control RRC setup complete message, an RRC reconfiguration complete message, and an RRC resume complete message.

In a possible implementation, before the receiving related information of conditional handover, the method further includes: sending a reporting indication. The reporting indication is used to indicate to send the related information.

According to a third aspect, an embodiment of this application provides an information transmission apparatus, applied to a terminal device and including a first sending module, configured to send related information of conditional handover. The conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for the terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the apparatus further includes a first information module, configured to send a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the apparatus further includes a recording module, configured to record the related information based on first configuration information and/or predefined information.

In a possible implementation, the first configuration information includes at least one of the following: a recording period; a recording start moment; a recording end moment; and timer information of a second timer.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the apparatus further includes a first indication module, configured to send third indication information. The third indication information is used to indicate whether the related information exists in the terminal device.

In a possible implementation, the first indication module is specifically configured to send a first message. The first message includes the third indication information. The first message includes at least one of the following: a radio resource control RRC setup complete message, an RRC reconfiguration complete message, and an RRC resume complete message.

In a possible implementation, the apparatus further includes an execution module, configured to: receive a reporting indication, and send the related information based on the reporting indication. Alternatively, the execution module is further configured to send the related information when a preconfigured trigger condition is satisfied. Alternatively, the execution module is further configured to send the related information based on a preset period.

In a possible implementation, the trigger condition includes at least one of the following: Start duration of the second timer is greater than or equal to a preset threshold; and a radio link failure occurs.

According to a fourth aspect, an embodiment of this application provides an information transmission apparatus, applied to a network device and including a first receiving module, configured to receive related information of conditional handover. The conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for a terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the apparatus further includes a second information module, configured to receive a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the related information is obtained through recording based on first configuration information and/or predefined information.

In a possible implementation, the first configuration information includes at least one of the following: a recording period; a recording start moment; a recording end moment; and timer information.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the apparatus further includes a second indication module, configured to receive third indication information. The third indication information is used to indicate whether the related information exists in the terminal device.

In a possible implementation, the apparatus further includes a second receiving module, configured to receive a first message. The first message includes the third indication information. The first message includes at least one of the following: a radio resource control RRC setup complete message, an RRC reconfiguration complete message, and an RRC resume complete message.

In a possible implementation, the apparatus further includes a second sending module, configured to send a reporting indication. The reporting indication is used to indicate to send the related information.

According to a fifth aspect, an embodiment of this application provides a terminal device, including a processor and a memory. The memory stores computer-executable instructions. The processor executes the computer-executable instructions stored in the memory, to enable the terminal device to perform the method described in any one of the first aspect or the possible implementations of the first aspect.

According to a sixth aspect, an embodiment of this application provides a network device, including a processor and a memory. The memory stores computer-executable instructions. The processor executes the computer-executable instructions stored in the memory, to enable the network device to perform the method described in any one of the second aspect or the possible implementations of the second aspect.

According to a seventh aspect, an embodiment of this application provides a computer-readable storage medium. The computer-readable storage medium stores a computer program. When the computer program is executed by a processor, the method according to the first aspect is implemented.

According to an eighth aspect, an embodiment of this application provides a computer program product. The computer program product includes a computer program. When the computer program is run, a computer is enabled to perform the method according to the first aspect.

According to a ninth aspect, an embodiment of this application provides a chip. The chip includes a processor. The processor is configured to invoke a computer program in a memory, to perform the method according to the first aspect.

Embodiments of this application provide an information transmission method, a device, and a storage medium. The method includes: sending related information of conditional handover. The conditional handover is conditional handover with candidate master and secondary cell groups. In the foregoing solution, a terminal device sends related information of conditional handover to a network device, so that the network device can determine a problem in a conditional handover process based on the related information of the conditional handover, thereby resolving the problem and improving communication quality.

### BRIEF DESCRIPTION OF DRAWINGS

FIG. 1 is a diagram of an architecture of a communication system according to an embodiment of this application;
FIG. 2 is a schematic diagram of triggering an execution condition according to an embodiment of this application;
FIG. 3 is a schematic flowchart of an information transmission method according to an embodiment of this application;
FIG. 4 is a schematic diagram of dual connectivity according to an embodiment of this application;
FIG. 5 is a schematic diagram of a reporting indication according to an embodiment of this application;
FIG. 6A is a schematic diagram of recording related information according to an embodiment of this application;
FIG. 6B is a schematic diagram of recording related information according to an embodiment of this application;
FIG. 7 is a schematic diagram of third indication information according to an embodiment of this application;
FIG. 8 is a schematic diagram of a structure of an information transmission apparatus according to an embodiment of this application;
FIG. 9 is a schematic diagram of a structure of an information transmission apparatus according to an embodiment of this application;
FIG. 10 is a schematic diagram of a structure of a terminal device according to an embodiment of this application; and
FIG. 11 is a schematic diagram of a structure of a network device according to an embodiment of this application.

### DESCRIPTION OF EMBODIMENTS

To clearly describe the technical solutions in the embodiments of this application, in the embodiments of this application, a word such as "example" or "for example" is used to represent an example, an illustration, or a description. Any embodiment or design solution described as an "example" or "for example" in this application should not be construed as being preferred or advantageous over another embodiment or design solution. Exactly, use of the word such as "example" or "for example" is intended to present a related concept in a specific manner.

In the embodiments of this application, "at least one" means one or more, and "a plurality of" means two or more. The term "and/or" describes an association relationship between associated objects and represents that three relationships may exist. For example, A and/or B may represent that only A exists, both A and B exist, and only B exists, where A and B may be singular or plural. The character "/" usually indicates an "or" relationship between associated objects. "At least one of the following" or a similar expression thereof means any combination of these items, including a single item or any combination of a plurality of items. For example, at least one of a, b, or c may represent a, b, c, a and b, a and c, b and c, or a, b, and c, where a, b, and c may be singular or plural.

It should be noted that in the embodiments of this application, "when..." may be an instantaneous occurrence time of a case, or may be a period of time after occurrence of a case. This is not specifically limited in the embodiments of this application. In addition, a display interface provided in the embodiments of this application is merely an example, and the display interface may further include more or less content.

The following first briefly describes a term in the embodiments of this application.

Conditional handover (conditional handover) is a handover procedure performed by a terminal device when a configured condition is satisfied.

To better understand the information indication method provided in the embodiments of this application, the following first describes an architecture of a communication system in the embodiments of this application.

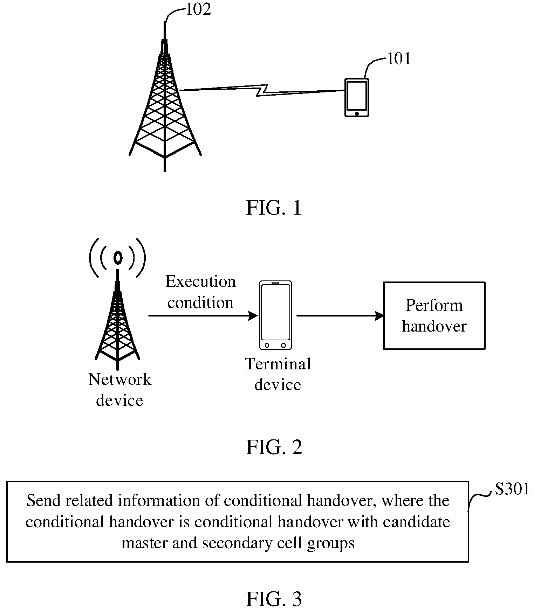

For example, FIG. 1 is a diagram of an architecture of a communication system according to an embodiment of this application. As shown in FIG. 1, the communication system 100 includes a terminal device 101 and a network device 102. Wireless communication is performed between the terminal device 101 and the network device 102.

The network device 102 in this embodiment of this application includes an access network device 1021 and a core network device 1022.

The access network (radio access network, RAN for short) device is an intermediate device through which the terminal accesses the core network device in a wireless manner, and is mainly responsible for radio resource management on an air interface side, quality of service (quality of service, QoS for short) management, data compression and encryption, and the like, for example, a base station NodeB, an evolved base station eNodeB, a base station in a 5G mobile communication system or a new radio (new radio, NR for short) communication system, or a base station in a future mobile communication system.

The core network (core network, CN for short) device includes a user plane function (user plane function, UPF for short) network element, an access and mobility management function (access and mobility management function, AMF for short) network element, a session management function (session management function, SMF for short) network element, a policy control function (policy control function, PCF for short) network element, and the like. The UPF network element is mainly responsible for user data transmission. Another network element may be referred to as a control plane function network element, and is mainly responsible for authentication, authorization, registration management, session management, mobility management, policy control, and the like, to ensure reliable and stable user data transmission.

In embodiments of this application, an apparatus configured to implement a function of the network device may be a network device, or may be an apparatus, for example, a chip system, that can support the network device in implementing the function. The apparatus may be installed in the network device.

The technical solutions provided in the embodiments of this application may be applied to a long term evolution (Long Term Evolution, LTE for short) architecture, and may be further applied to a universal mobile telecommunications system (Universal Mobile Telecommunications System, UMTS for short) terrestrial radio access network (UMTS Terrestrial Radio Access Network, UTRAN for short) architecture, or a global system for mobile communications (Global System for Mobile Communication, GSM for short)/enhanced data rate for GSM evolution (Enhanced Data Rate for GSM Evolution, EDGE for short) system radio access network (GSM EDGE Radio Access Network, GERAN for short) architecture. In addition, the technical solutions provided in the embodiments of this application may be further applied to any other wireless communication system having a similar structure and function, for example, a public land mobile network (Public Land Mobile Network, PLMN for short) system, a 5G communication system, or a communication system after 5G. This is not limited in the embodiments of this application.

The network device in this application may be a device that communicates with the terminal device. The network device may also be referred to as an access network device or a radio access network device. The network device may be a transmission reception point (transmission reception point, TRP for short), may be an evolved NodeB (evolved NodeB, eNB or eNodeB for short) in an LTE system, may be a home base station (for example, home evolved NodeB or home Node B, HNB for short) or a base band unit (base band unit, BBU for short), or may be a radio controller in a cloud radio access network (cloud radio access network, CRAN for short) scenario. Alternatively, the network device may be a relay station, an access point, a vehicle-mounted device, a wearable device, a network device in a 5G network, a network device in a future evolved PLMN network, or the like, may be an access point (access point, AP for short) in a WLAN, or may be a gNB in an NR system. Alternatively, the network device may be an urban base station, a micro base station, a pico base station, a femto base station, or the like. This is not limited in this application.

In a network structure, the network device may include a centralized unit (centralized unit, CU for short) node, a distributed unit (distributed unit, DU) node, a RAN device including a CU node and a DU node, or a RAN device including a CU control plane node (CU-CP node), a CU user plane node (CU-UP node), and a DU node.

The network device provides a service for a cell, and the terminal device communicates with the cell by using a transmission resource (for example, a frequency domain resource or a spectrum resource) allocated by the network device. The cell may belong to a macro base station (for example, macro eNB or macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are suitable for providing high-speed data transmission services.

Wireless communication between communication devices may include wireless communication between a network device and a terminal, wireless communication between network devices, and wireless communication between terminals. In the embodiments of this application, the term "wireless communication" may also be briefly referred to as "communication", and the term "communication" may also be described as "data transmission", "information transmission", or "transmission". A person skilled in the art may use the technical solutions provided in the embodiments of this application to perform wireless communication between a network device and a terminal, for example, wireless communication between an access network device and a terminal and wireless communication between a core network device and a terminal.

The terminal device in the embodiments of this application may also be referred to as user equipment (user equipment, UE for short), a mobile station (mobile station, MS for short), a mobile terminal (mobile terminal, MT for short), an access terminal, a subscriber unit, a subscriber station, a mobile station, a mobile console, a remote station, a remote terminal, a mobile device, a user terminal, a terminal, a wireless communication device, a user agent, a user apparatus, or the like.

The terminal device may be a device that provides voice and/or data connectivity for users, for example, a handheld device or a vehicle-mounted device with a wireless connection function. Currently, some examples of the terminal device include a mobile phone (mobile phone), a tablet computer, a notebook computer, a palmtop computer, a mobile internet device (mobile internet device, MID for short), a wearable device, a virtual reality (virtual reality, VR for short) device, an augmented reality (augmented reality, AR for short) device, a wireless terminal in industrial control (industrial control), a wireless terminal in self-driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP for short) phone, a wireless local loop (wireless local loop, WLL for short) station, a personal digital assistant (personal digital assistant, PDA for short), a handheld device with a wireless communication function, a compute device or another processing device connected to a wireless modem, a vehicle-mounted device, a wearable device, a terminal device in a 5G network, a terminal device in a future evolved public land mobile network (public land mobile network, PLMN for short), and the like. This is not limited in this application.

As an example rather than a limitation, in this application, the terminal device may be a terminal device in an internet of things (internet of things, IoT for short) system. An internet of things is an important component in future development of information technology, and a main technical feature thereof is connecting a thing to a network by using a communication technology, to implement an intelligent network of human-machine interconnection and interconnection between things. As an example rather than a limitation, the terminal device in the embodiments of this application may be a wearable device. The wearable device may also be referred to as a wearable intelligent device, and is a generic term for wearable devices that are intelligently designed and developed for daily wear by using a wearable technology, for example, glasses, gloves, watches, clothes, and shoes. The wearable device is a portable device that can be directly worn on a body or integrated with clothes or an accessory of a user. The wearable device is more than a hardware device, and can even implement a powerful function through software support, data interaction, and cloud interaction. In a broad sense, the wearable intelligent device includes a full-featured and large-sized device that can implement all or some functions without depending on a smartphone, for example, a smartwatch or smart glasses, and includes a device that provides only one type of application function and that needs to be used in combination with another device such as a smartphone, for example, various smart bands or various pieces of smart jewelry for monitoring physical signs.

As an example rather than a limitation, in the embodiments of this application, the terminal device may alternatively be a terminal device in machine type communication (machine type communication, MTC for short). In addition, the terminal device may alternatively be a vehicle-mounted module, a vehicle-mounted assembly, a vehicle-mounted component, a vehicle-mounted chip, a vehicle-mounted unit, or the like that is built in a vehicle as one or more components or units. The vehicle may implement, by using the built-in vehicle-mounted module, vehicle-mounted assembly, vehicle-mounted component, vehicle-mounted chip, vehicle-mounted unit, or the like, the method provided in this application. Therefore, the embodiments of this application may also be applied to an internet of vehicles, for example, a vehicle-to-everything (vehicle to everything, V2X for short) technology, a long term evolution-vehicle (long term evolution-vehicle, LTE-V for short) technology, and a vehicle-to-vehicle (vehicle-to-vehicle, V2V for short) technology.

For a communication quality optimization scenario, communication quality optimization may be implemented by using a minimization of drive tests (Minimization Drive Test, MDT for short) technology. The minimization of drive tests technology is an automated drive test technology that uses a network device to configure a terminal device for measurement data collection, reporting, and preprocessing. When the terminal device has GPS enabled and supports a minimization of drive tests function, this technology can automatically report minimization of drive tests data that includes user location information to the terminal device. The minimization of drive tests data includes fields such as RSRP and RSRQ, and includes GPS latitude and longitude information. The information may be used for communication quality analysis. A design concept of the minimization of drive tests technology includes minimizing additional consumption of the terminal device and maximizing availability of location information, to reduce labor, equipment, and time costs required for conventional drive tests and improve drive test efficiency. The minimization of drive tests technology may be applied to areas that cannot be reached by test vehicles, for example, narrow roads and residential areas, and can report a problem with a common terminal device in a timely manner.

Conditional handover is a mobility enhancement technology introduced in 3gpp (3rd generation partnership project, 3rd generationpartnership project, 3gpp for short) r16. Compared with a conventional handover method, conditional handover can increase a handover success rate. In a preparation phase of conditional handover, a source network device prepares several candidate cells, and separately sends a handover request message to all the candidate cells, and a terminal device selects to hand over to one of the candidate cells.

In a related technology, the source network device sends an execution condition for handover to the terminal device, and the terminal device performs handover based on the execution condition. However, if the execution condition is improper, the terminal device cannot successfully perform handover, and a problem of a communication link failure may occur, affecting communication of the terminal device.

FIG. 2 is a schematic diagram of triggering an execution condition according to an embodiment of this application. As shown in FIG. 2, a network device sends an execution condition for handover to a terminal device, and the terminal device performs handover based on the execution condition. Specifically, the terminal device evaluates the execution condition in real time. If the terminal device satisfies the execution condition, it indicates that current communication quality needs to be optimized, and handover execution is triggered to improve the communication quality.

The following describes, by using specific embodiments, in detail the technical solutions shown in this application. It should be noted that the following several embodiments may exist alone or may be combined with each other. Same or similar content, for example, explanations and descriptions of terms or nouns and explanations and descriptions of steps, may be mutually referenced in different embodiments. No repeated descriptions are provided.

FIG. 3 is a schematic flowchart of an information transmission method according to an embodiment of this application. As shown in FIG. 3, the information transmission method includes the following steps.

S301: Send related information of conditional handover, where the conditional handover is conditional handover with candidate master and secondary cell groups.

The conditional handover with candidate master and secondary cell groups is that a terminal device performs handover when the terminal satisfies an execution condition of a primary cell and/or an execution condition of a primary secondary cell.

Descriptions are provided with reference to a scenario example. In a dual-connectivity scenario, the terminal device may simultaneously use radio resources from two nodes, to improve radio resource utilization and reduce a handover delay. The nodes include a master node and a secondary node. The master node provides radio access to a core network, and the secondary node is not connected to a control plane of the core network. Cells under the master node are a master cell group, and cells under the secondary node are a secondary cell group. A cell with best signal quality in the master cell group is a primary cell, and a cell with best signal quality in the secondary cell group is a primary secondary cell.

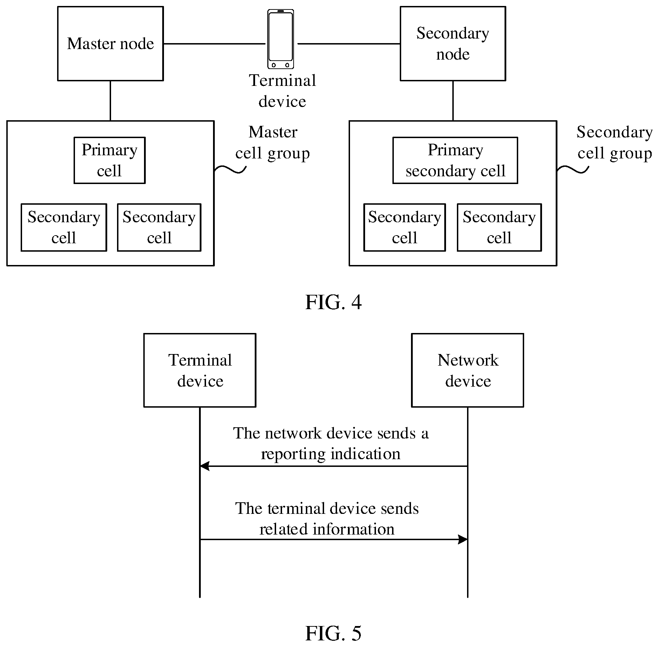

The following describes dual connectivity with reference to FIG. 4.

FIG. 4 is a schematic diagram of dual connectivity according to an embodiment of this application. As shown in FIG. 4, the terminal device uses radio resources from the master node and the secondary node. The master cell group under the master node includes the primary cell and a secondary cell, and the secondary cell group under the secondary node includes the primary secondary cell and a secondary cell.

In a feasible implementation, the sending related information of conditional handover includes: receiving a reporting indication, and sending the related information based on the reporting indication; sending the related information when a preconfigured trigger condition is satisfied; or sending the related information based on a preset period.

The following describes the reporting indication with reference to FIG. 5.

FIG. 5 is a schematic diagram of a reporting indication according to an embodiment of this application. As shown in FIG. 5, a network device sends a reporting indication to the terminal device, and indicates, by using the reporting indication, the terminal device to send the related information. The terminal device sends the related information to the network device in response to the reporting indication.

Descriptions are provided with reference to a scenario example. When the network device detects that a communication link of the terminal device is interrupted, when the network device predicts that a communication link of the terminal device will be interrupted, or when the network device determines that the execution condition is improper, a reporting indication is sent to the terminal device, to indicate the terminal device to send the related information. In addition, a conditional handover problem is resolved based on the related information. In this indication manner, the terminal device can be flexibly indicated to send the related information in real time, thereby improving processing timeliness. The terminal device stores the preconfigured trigger condition. When the terminal device satisfies the trigger condition, the related information is sent. In this manner, the related information can be sent in a timely manner, thereby reducing a sending delay. The terminal device sends the related information based on the stored preset period. In this manner, signaling overheads of sending the reporting indication by the network device can be reduced.

Optionally, the network device sends the trigger condition to the terminal device, or configures the trigger condition by using a communication protocol.

Optionally, the network device predicts the preset period based on historical related information of the terminal device.

In this feasible implementation, in a plurality of indication manners, the terminal device can be flexibly indicated to send the related information.

In a feasible implementation, the trigger condition includes at least one of the following: Start duration of a second timer is greater than or equal to a preset threshold; and a radio link failure occurs.

Descriptions are provided with reference to a scenario example. If a radio link failure occurs, communication of the terminal device is severely affected. In this case, the terminal device immediately sends the related information, so that the network device determines a problem based on the related information. In addition, if the terminal device successfully performs handover, and no link failure occurs, a target cell to which the terminal device is handed over may still be not a cell with best quality. In this case, adjusting the target cell for handover may improve communication quality. The second timer may be used as the trigger condition, and the related information may be periodically sent to the network device, thereby effectively improving the communication quality.

In a feasible implementation, the related information includes at least one of the following: configuration-related information; condition-related information of an execution condition, where the execution condition includes an execution condition of a candidate primary cell and/or an execution condition of a candidate primary secondary cell; and handover-related information.

Descriptions are provided with reference to a scenario example. The configuration may be defined by the network device or defined in a communication protocol, and a terminal device having the configuration may perform conditional handover. The terminal device configures, based on the execution condition, a moment for performing conditional handover, and when the execution condition is satisfied, starts to perform conditional handover. Each time after the terminal device completes handover, handover-related information corresponding to the current handover is recorded.

Specifically, in a feasible implementation, the configuration-related information is used to indicate whether the conditional handover with candidate master and secondary cell groups has been configured for the terminal device.

Descriptions are provided with reference to a scenario example. When the conditional handover with candidate master and secondary cell groups has been configured for the terminal device, the terminal device may perform the conditional handover with candidate master and secondary cell groups.

Optionally, a manner of indicating the configuration-related information includes but is not limited to at least one of the following: The configuration-related information is indicated by using 1-bit signaling, indicated through enumeration, or implicitly indicated, or the like.

For example, if the 1-bit signaling includes "1", it indicates that the conditional handover with candidate master and secondary cell groups has been configured for the terminal device. If the 1-bit signaling includes "0", it indicates that the conditional handover with candidate master and secondary cell groups is not configured. Indication through enumeration may be that the terminal device sends a handover failure of the primary cell to the network device. Implicit indication may be that if conditional handover is successfully performed, it indicates that the corresponding execution condition is satisfied, or if conditional handover fails to be performed, it indicates that the corresponding execution condition is not satisfied.

In a feasible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

Descriptions are provided with reference to a scenario example. For the conditional handover with candidate master and secondary cell groups, the terminal device needs to determine the execution condition related to the primary cell and/or the execution condition related to the primary secondary cell, to determine a moment for performing handover. The execution condition related to the primary cell and/or the execution condition related to the primary secondary cell include/includes a specific determining threshold. The network device may determine, based on the execution condition related to the primary cell and/or the execution condition related to the primary secondary cell, whether the execution condition is properly configured. Due to impact of a factor such as movement of the terminal device or interference, a time when the execution condition is satisfied or a cell in which the execution condition is satisfied changes.

Optionally, if the execution condition is improper, the network device generates an optimized execution condition, and sends the optimized execution condition to the terminal device.

In a feasible implementation, the time-related information includes at least one of the following:
a moment at which or a time period in which the execution condition of the candidate primary cell is satisfied;
a moment at which or a time period in which the execution condition of the candidate primary secondary cell is satisfied;
duration for which the execution condition of the candidate primary cell has been satisfied;
duration for which the execution condition of the candidate primary secondary cell has been satisfied;
a time difference between satisfaction of a first execution condition and a second execution condition, where the first execution condition is the execution condition of the candidate primary cell, and the second execution condition is the execution condition of the candidate primary secondary cell; and
satisfaction order information of the first execution condition and the second execution condition.

Descriptions are provided with reference to a scenario example. The network device may compare, based on whether the moment at which or the time period in which the execution condition is satisfied matches, whether the execution condition of the primary cell matches the execution condition of the primary secondary cell, to determine whether the execution condition is proper.

For example, the duration for which the execution condition has been satisfied is duration between the moment at which the execution condition is satisfied and a moment at which a link failure occurs, duration between the moment at which the execution condition is satisfied and a moment at which the terminal device sends the related information to the network device, or duration between the moment at which the execution condition is satisfied and a moment at which the conditional handover starts to be performed.

Descriptions are provided with reference to a scenario example. If the duration for which the execution condition has been satisfied exceeds a threshold, it indicates that the execution condition is properly configured, and the network device determines, based on the duration for which the execution condition has been satisfied, whether the execution condition is proper.

For example, a larger value of the time difference between satisfaction of the first execution condition and the second execution condition indicates a relatively large threshold of one of the execution conditions and poorer matching between the first execution condition and the second execution condition.

For example, the satisfaction order information of the first execution condition and the second execution condition is that the first execution condition is satisfied first or the second execution condition is satisfied first.

For example, the time difference between satisfaction of the first execution condition and the second execution condition and the satisfaction order information of the first execution condition and the second execution condition may be combined for implementation.

Descriptions are provided with reference to a scenario example. With reference to the time difference between satisfaction of the first execution condition and the second execution condition and the satisfaction order information of the first execution condition and the second execution condition, it may be determined whether the execution condition is proper. For example, if the first execution condition is satisfied first, the second execution condition is satisfied later, and a value of the time difference exceeds a value threshold, a case in which although conditional handover is successfully performed this time, a success rate of subsequently performing conditional handover is low may occur. In this case, it indicates that a threshold of the first execution condition is relatively easy to reach, and a threshold of the second execution condition is relatively difficult to reach. Consequently, after the first execution condition is satisfied, it still needs to wait for a relatively long time to satisfy the second execution condition. Duration for performing conditional handover is excessively long, indicating that the execution condition is improperly configured.

In this feasible implementation, it may be determined, from a plurality of dimensions by using a plurality of pieces of time information, whether the execution condition is proper, thereby improving determining accuracy.

In a feasible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

For example, the related information of the execution condition includes but is not limited to at least one of the following: an event index (event ID), an event-related configuration (a threshold, hysteresis, and a time to trigger), a measurement index (measurement identity), and cell-related information (a cell index or a cell type-a primary cell or a primary secondary cell).

Descriptions are provided with reference to a scenario example. The first identifier corresponds to two scenarios: a moment and a time period. For the moment scenario, for example, the moment at which the first execution condition is satisfied is 09:10, earlier than the moment 09:20 at which the second execution condition is satisfied. For the time period scenario, for example, the moment at which the first execution condition is satisfied is in a time period 09:00-09:59, and the moment at which the second execution condition is satisfied is in a time period 10:00-10:59. That is, the time period in which the first execution condition is satisfied is earlier than the time period in which the second execution condition is satisfied. The second identifier corresponds to two scenarios, namely, a moment and a time period, in a similar manner.

It may be understood that by using the related information of the execution condition, an event or a cell corresponding to the execution condition may be accurately determined, and specific content of the execution condition may be accurately determined.

For example, a sequence relationship between satisfaction moments or time periods of the two execution conditions is determined by using the first identifier and the second identifier. If the order information includes the first identifier, it indicates that the first execution condition is satisfied first. If the order information includes the second identifier, it indicates that the second execution condition is satisfied first.

In a feasible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

Optionally, an indication manner of the first indication information and the second indication information includes but is not limited to at least one of the following: indication by using 1-bit signaling, indication through enumeration, implicit indication, or the like.

It should be noted that for the indication manner of the indication information, refer to the indication manner of the configuration-related information. Details are not described herein.

For example, the terminal device determines whether the execution condition of the primary cell and the execution condition of the primary secondary cell in the first indication information are separately satisfied. The terminal device determines whether both the execution condition of the primary cell and the execution condition of the primary secondary cell in the second indication information are satisfied.

For example, only one of the execution condition of the candidate primary cell and the execution condition of the candidate primary secondary cell in the first candidate cell pair is satisfied, and both the execution condition of the candidate primary cell and the execution condition of the candidate primary secondary cell in the first candidate cell pair are satisfied.

Descriptions are provided with reference to a scenario example. The network device optimizes the execution condition based on the candidate cell pair information in the cell-related information. If the cell-related information includes the cell pair information of the first candidate cell pair, an execution condition that is not satisfied is optimized, for example, a threshold parameter in the execution condition is adjusted. If the cell-related information includes the cell pair information of the second candidate cell pair, it indicates that both the execution condition of the candidate primary cell and the execution condition of the candidate primary secondary cell are satisfied. In this case, it is evaluated whether the execution condition of the candidate primary cell and the execution condition of the candidate primary secondary cell match, and the execution condition is optimized based on an evaluation result, to improve handover reliability.

Descriptions are provided with reference to a scenario example. The cell information includes a cell index, and the network device may accurately determine a corresponding cell. The cell information includes the execution condition, and the network device may quickly obtain the execution condition, thereby improving execution efficiency.

Optionally, there is a transmission configuration indicator state (Transmission Configuration Indicator state, TCI state for short), and a transmission configuration indicator specifically includes but is not limited to one of the following: a TCI state, a TCI state index, or whether activation is implemented. The network device may select an optimal transmission beam based on the TCI state, to optimize data transmission reliability. Based on information about whether the TCI state is activated, the network device may determine whether to complete downlink synchronization with a target cell or whether a neighboring cell has an activated TCI state.

In a feasible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

Descriptions are provided with reference to a scenario example. An execution condition of one candidate cell in the first candidate cell pair is satisfied, and an execution condition of the other candidate cell is not satisfied. Recording the information in the cell-related information is meaningful for network optimization and troubleshooting. Specifically, by analyzing a cell whose execution condition is satisfied and a cell whose execution condition is not satisfied, the network device may better understand network performance and coverage, to optimize network configuration, adjust a handover parameter, or a resolve potential network problem.

In a feasible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

If the terminal device can receive a signal of the target cell and perform communication after handover is performed, the handover result is a handover success. Otherwise, there is a handover failure. Cell indexes may be used to accurately distinguish between cells, to avoid cell confusion, thereby improving accuracy of resolving a conditional handover problem. The measurement result includes but is not limited to at least one of the following: signal quality, an interference level, signal coverage, signal strength, or the like. The total duration of the first timer in the timer information is duration for handover. Timing starts at a moment at which the terminal device starts to perform handover, and timing stops at a moment at which the terminal device completes handover. Duration between the moment at which timing starts and the moment at which timing ends is used as the elapsed running duration. A difference between the total duration and the elapsed running duration is the remaining duration.

Descriptions are provided with reference to a scenario example. The network device may evaluate communication quality of the terminal device from a plurality of dimensions based on a plurality of measurement results, to improve accuracy of resolving a conditional handover problem.

Optionally, handover execution is controlled by using the total duration of the first timer. If duration of performing handover exceeds the total duration of the first timer, handover execution is stopped, and it is determined that the handover result is a handover failure.

Optionally, the total duration of the first timer is optimized based on the remaining duration of the first timer or the elapsed running duration of the first timer. For example, if the handover result is a handover success and the elapsed running duration of the first timer is relatively long or the remaining duration of the first timer is relatively short, the first timer is reconfigured.

Descriptions are provided with reference to a scenario example. The network device may determine, based on the timer information, ease of performing handover. Shorter elapsed running duration of the first timer or longer remaining duration of the first timer indicates that it is easier to perform handover and imperceptible handover can be implemented. A communication interruption problem caused by continuous handover execution may be avoided by controlling handover execution by using the total duration of the first timer.

Optionally, a moment corresponding to the handover result is recorded in the handover-related information.

Optionally, if the handover fails, a specific cause of the failure is recorded, for example, a signal quality problem or insufficient resources of the target cell.

In a feasible implementation, the information transmission method further includes: sending a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

Descriptions are provided with reference to a scenario example. The terminal device reports a link status, and the network device may clearly learn of a status of a link corresponding to the terminal device, to quickly resolve the conditional handover problem. The terminal device reports the first capability before reporting the related information of the conditional handover. The network device determines, based on the first capability, that the network device does not need to obtain the link status, thereby reducing operations of the network device. The terminal device reports the handover result, and the network device may clearly learn of the handover result corresponding to the terminal device, to quickly resolve the conditional handover problem. The terminal device reports the second capability before reporting the related information of the conditional handover. The network device determines, based on the second capability, that the network device does not need to obtain the handover result, thereby reducing operations of the network device.

In a feasible implementation, the related information is recorded based on first configuration information and/or predefined information.

Optionally, the first configuration information is indicated by the network device, and the predefined information is preconfigured by the terminal device. The terminal device determines, based on the first configuration information and/or the predefined information, a moment for recording the related information.

Specifically, in a feasible implementation, the first configuration includes at least one of the following: a recording period; a recording start moment; a recording end moment; and timer information of a second timer.

Descriptions are provided with reference to a scenario example. The terminal device records the related information at an interval of duration corresponding to the recording period. The terminal device starts to record the related information at the recording start moment. The terminal device ends recording the related information at the recording end moment. The terminal device starts to record the related information after duration corresponding to the second timer has elapsed from a moment at which the first configuration information is received.

In a feasible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

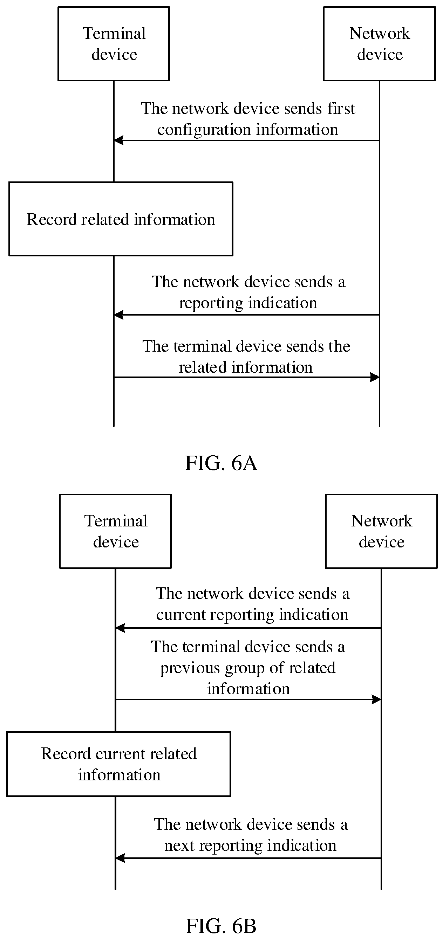

For a solution of the first configuration information, the following describes recording of the related information with reference to FIG. 6A.

FIG. 6A is a schematic diagram of recording related information according to an embodiment of this application. As shown in FIG. 6A, the network device sends the first configuration information, and indicates, by using the first configuration information, a moment at which the terminal device performs recording of the related information. The terminal device starts to record the related information in response to the first configuration information. The terminal device sends the recorded related information when the terminal device receives the reporting indication sent by the network device.

For a solution in which the first configuration information is not included, the following describes recording of the related information with reference to FIG. 6B.

FIG. 6B is a schematic diagram of recording related information according to an embodiment of this application. As shown in FIG. 6B, the related information is recorded based on a configuration of the terminal device. The terminal device sends a previous group of recorded related information in response to a current reporting indication sent by the network device, and records current related information, and the terminal device sends the current related information when receiving a next reporting indication.

In a feasible implementation, the information transmission method further includes: sending third indication information. The third indication information is used to indicate whether the related information exists in the terminal device.

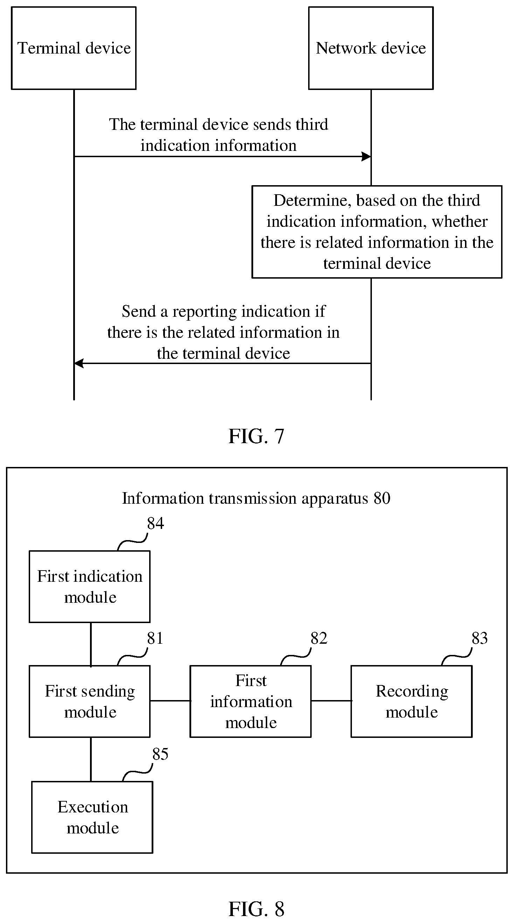

The following describes the third indication information with reference to FIG. 7.

FIG. 7 is a schematic diagram of third indication information according to an embodiment of this application. As shown in FIG. 7, the terminal device sends the third indication information to the network device, and the network device determines, based on the third indication information, whether the related information exists in the terminal device. If the related information exists in the terminal device, the network device sends a reporting indication to the terminal device.

In this feasible implementation, the network device may determine, by using the third indication information, whether the related information exists in the terminal device, and if the network device sends a reporting indication when the related information does not exist in the terminal device, a waste of signaling resources is caused.

In a feasible implementation, the sending third indication information includes: sending a first message. The first message includes the third indication information. The first message includes at least one of the following: a radio resource control RRC setup complete message, an RRC reconfiguration complete message, and an RRC resume complete message.

Descriptions are provided with reference to a scenario example. In an initial access process, when the terminal device establishes an initial radio resource control connection to the network device, after successfully completing an RRC connection setup procedure, the terminal device sends an RRC setup complete message to notify the network device. When the network device needs to modify a radio resource configuration (for example, changing a serving cell or adjusting a transmission parameter) of the terminal, an RRC reconfiguration message is sent to the terminal device. After successfully applying a configuration change, the terminal device sends an RRC reconfiguration complete message to the network device to confirm that the change has been completed. When the UE enters a low power state (a low power state), and needs to resume to an active state later, the network device sends an RRC resume message to wake up the terminal device. After completing a resume procedure, the terminal device sends an RRC resume complete message to notify the network device that data transmission can be performed.

In this feasible implementation, the third indication information may be flexibly sent by using a plurality of forms of the first message.

The information transmission method in the embodiments of this application is described above. An apparatus for performing the information transmission method provided in an embodiment of this application is described below. A person skilled in the art may understand that the method and the apparatus may be combined and mutual reference may be made, and that a related apparatus provided in an embodiment of this application may perform the steps in the foregoing information transmission method.

FIG. 8 is a schematic diagram of a structure of an information transmission apparatus according to an embodiment of this application. As shown in FIG. 8, the information transmission apparatus 80 includes:
a first sending module 81, configured to send related information of conditional handover, where the conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for a terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the apparatus further includes a first information module 82, configured to send a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the apparatus further includes a recording module 83, configured to record the related information based on first configuration information and/or predefined information.

In a possible implementation, the first configuration information includes at least one of the following: a recording period; a recording start moment; a recording end moment; and timer information of a second timer.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the apparatus further includes a first indication module 84, configured to send third indication information. The third indication information is used to indicate whether the related information exists in the terminal device.

In a possible implementation, the first indication module 84 is specifically configured to send a first message. The first message includes the third indication information. The first message includes at least one of the following: a radio resource control RRC setup complete message, an RRC reconfiguration complete message, and an RRC resume complete message.

In a possible implementation, the apparatus further includes an execution module 85, configured to: receive a reporting indication, and send the related information based on the reporting indication. Alternatively, the execution module 85 is further configured to send the related information when a preconfigured trigger condition is satisfied. Alternatively, the execution module 85 is further configured to send the related information based on a preset period.

In a possible implementation, the trigger condition includes at least one of the following: Start duration of the second timer is greater than or equal to a preset threshold; and a radio link failure occurs.

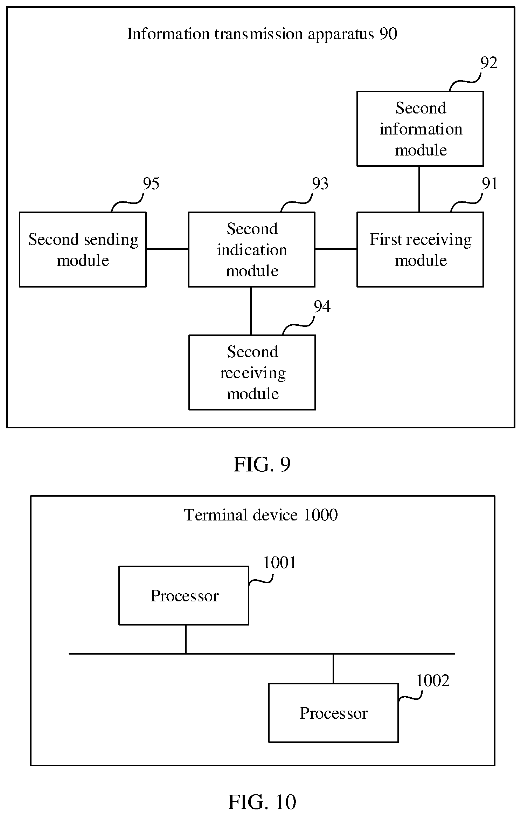

FIG. 9 is a schematic diagram of a structure of an information transmission apparatus according to an embodiment of this application. As shown in FIG. 9, the information transmission apparatus 90 includes a first receiving module 91, configured to receive related information of conditional handover. The conditional handover is conditional handover with candidate master and secondary cell groups.

In a possible implementation, the related information includes at least one of the following: configuration-related information; condition-related information of an execution condition, where the execution condition includes an execution condition of a candidate primary cell and/or an execution condition of a candidate primary secondary cell; and handover-related information.

In a possible implementation, the configuration-related information is used to indicate whether the conditional handover with candidate master and secondary cell groups has been configured for a terminal device.

In a possible implementation, the condition-related information includes at least one of the following: an execution condition, where the execution condition includes an execution condition related to a primary cell and/or an execution condition related to a primary secondary cell; time-related information when the execution condition is satisfied; and cell-related information when the execution condition is satisfied.

In a possible implementation, the time-related information includes at least one of the following: a moment at which or a time period in which the execution condition of the candidate primary cell is satisfied; a moment at which or a time period in which the execution condition of the candidate primary secondary cell is satisfied; duration for which the execution condition of the candidate primary cell has been satisfied; duration for which the execution condition of the candidate primary secondary cell has been satisfied; a time difference between satisfaction of a first execution condition and a second execution condition, where the first execution condition is the execution condition of the candidate primary cell, and the second execution condition is the execution condition of the candidate primary secondary cell; and satisfaction order information of the first execution condition and the second execution condition.

In a possible implementation, the satisfaction order information includes at least one of the following: related information of a first triggered execution condition; related information of a second triggered execution condition; a first identifier, where the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and a second identifier, where the second identifier is used to indicate that the moment at which the first execution condition is satisfied is later than the moment at which the second execution condition is satisfied, or the time period in which the first execution condition is satisfied is later than the time period in which the second execution condition is satisfied.

In a possible implementation, the cell-related information includes at least one of the following: first indication information, where the first indication information is used to indicate whether an execution condition of a candidate primary cell is satisfied, and/or whether an execution condition of a candidate primary secondary cell is satisfied; second indication information, where the second indication information is used to indicate whether an execution condition of a candidate cell pair is satisfied, the candidate cell pair includes a candidate primary cell and a candidate primary secondary cell corresponding to the candidate primary cell, and the execution condition of the candidate cell pair includes an execution condition of the candidate primary cell and an execution condition of the candidate primary secondary cell; cell pair information of a first candidate cell pair, where an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied; primary cell information of a candidate primary cell whose execution condition is satisfied, where the primary cell information includes at least one of the following: an index of the candidate primary cell or the execution condition of the candidate primary cell; primary secondary cell information of a candidate primary secondary cell whose execution condition is satisfied, where the primary secondary cell information includes at least one of the following: an index of the candidate primary secondary cell or the execution condition of the candidate primary secondary cell; an execution condition of a candidate primary cell and an execution condition of a candidate primary secondary cell in a second candidate cell pair, where the execution conditions of the candidate primary cell and the candidate primary secondary cell in the second candidate cell pair are separately satisfied; and transmission configuration indicator state TCI state-related information.

In a possible implementation, the cell pair information includes at least one of the following: an index and/or an execution condition of a cell whose execution condition is satisfied in the first candidate cell pair; and an index and/or an execution condition of a cell whose execution condition is not satisfied in the first candidate cell pair.

In a possible implementation, the handover-related information includes at least one of the following: a handover result, where the handover result is used to indicate a handover success or a handover failure; an index of a candidate primary cell and an index of a candidate primary secondary cell in a second candidate cell pair, where execution conditions of the candidate primary cell and the candidate primary secondary cell in the second candidate cell pair are separately satisfied; a measurement result, where the measurement result includes at least one of the following: a measurement result of a serving cell, a measurement result of a neighboring cell, or a measurement result of a candidate cell; and timer information of a first timer, where the timer information includes at least one of the following: remaining duration of the first timer, elapsed running duration of the first timer, and a ratio of the remaining duration to total duration of the first timer.

In a possible implementation, the apparatus further includes a second information module 92, configured to receive a device capability of the terminal device. The device capability includes a first capability and/or a second capability. The first capability is used to indicate a link failure reporting capability of the terminal device in the conditional handover scenario. The second capability is used to indicate a handover result reporting capability of the terminal device in the conditional handover scenario.

In a possible implementation, the related information is obtained through recording based on first configuration information and/or predefined information.

In a possible implementation, the first configuration information includes at least one of the following: a recording period; a recording start moment; a recording end moment; and timer information.

In a possible implementation, the predefined information is used to indicate at least one of the following: recording the related information between receiving the first configuration information and receiving a reporting indication, where the reporting indication is used to indicate the terminal device to send the related information; and recording the related information between receiving two adjacent reporting indications.

In a possible implementation, the apparatus further includes a second indication module 93, configured to receive third indication information. The third indication information is used to indicate whether the related information exists in the terminal device.

In a possible implementation, the apparatus further includes a second receiving module 94, configured to receive a first message. The first message includes the third indication information. The first message includes at least one of the following: a radio resource control RRC setup complete message, an RRC reconfiguration complete message, and an RRC resume complete message.

In a possible implementation, the apparatus further includes a second sending module 95, configured to send a reporting indication. The reporting indication is used to indicate to send the related information.

FIG. 10 is a schematic diagram of a structure of a terminal device according to an embodiment of this application. As shown in FIG. 10, the terminal device 1000 includes a processor 1001 and a memory 1002. The memory 1002 stores computer-executable instructions. The processor 1001 executes the computer-executable instructions stored in the memory 1002, to enable the terminal device to execute the corresponding technical solutions in the foregoing method embodiments. Implementation principles and technical effects thereof are similar. Details are not described herein.

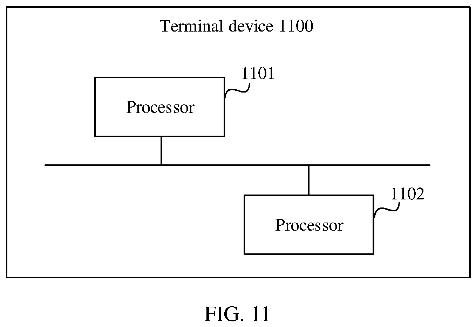

FIG. 11 is a schematic diagram of a structure of a network device according to an embodiment of this application. As shown in FIG. 11, the network device 1100 includes a processor 1101 and a memory 1102. The memory 1102 stores computer-executable instructions. The processor 1101 executes the computer-executable instructions stored in the memory 1102, to enable the network device to execute the corresponding technical solutions in the foregoing method embodiments. Implementation principles and technical effects thereof are similar. Details are not described herein.

The information transmission method provided in the embodiments of this application may be applied to an electronic device with a communication function. The electronic device includes a terminal device. For a specific device form and the like of the terminal device, refer to the foregoing related descriptions. Details are not described herein.

The information transmission method provided in the embodiments of this application may be applied to an electronic device with a communication function. The electronic device includes a network device. For a specific device form and the like of the network device, refer to the foregoing related descriptions. Details are not described herein.

An embodiment of this application provides a terminal device. The terminal device includes a processor and a memory. The memory stores computer-executable instructions. The processor executes the computer-executable instructions stored in the memory, to enable the terminal device to perform the foregoing method.

An embodiment of this application provides a network device. The network device includes a processor and a memory. The memory stores computer-executable instructions. The processor executes the computer-executable instructions stored in the memory, to enable the network device to perform the foregoing method.

An embodiment of this application provides a chip. The chip includes a processor, and the processor is configured to invoke a computer program in a memory to execute the technical solutions in the foregoing embodiments. Implementation principles and technical effects of the chip are similar to those in the foregoing related embodiments. Details are not described herein.

An embodiment of this application further provides a computer-readable storage medium. The computer-readable storage medium stores a computer program. When the computer program is executed by a processor, the foregoing method is implemented. All or some of the methods described in the foregoing embodiments may be implemented by using software, hardware, firmware, or any combination thereof. If the methods are implemented in software, a function may be stored on a computer-readable medium as one or more instructions or code or transmitted on a computer-readable medium. The computer-readable medium may include a computer storage medium and a communication medium, and may further include any medium that can transfer a computer program from one place to another place. The storage medium may be any target medium accessible by a computer.

In a possible implementation, the computer-readable medium may include a RAM, a ROM, a compact disc read-only memory (compact disc read-only memory, CD-ROM for short) or another optical disc memory, a magnetic disk memory or another magnetic storage device, or any other medium that is intended to carry or store required program code in a form of instructions or a data structure and that is accessible by a computer. In addition, any connection is appropriately referred to as a computer-readable medium. For example, if software is transmitted from a website, a server, or another remote source by using a coaxial cable, an optical fiber cable, a twisted pair, a digital subscriber line (Digital Subscriber Line, DSL for short), or wireless technologies (for example, infrared, radio, and microwave), the coaxial cable, the optical fiber cable, the twisted pair, the DSL, or the wireless technologies such as infrared, radio, and microwave are included in the definition of the medium. As used in this specification, a magnetic disk and an optical disc include a compact disc, a laser disc, an optical disc, a digital versatile disc (Digital Versatile Disc, DVD for short), a floppy disk, and a Blu-ray disc. The magnetic disk usually reproduces data magnetically, while the optical disc reproduces data optically by using a laser. The foregoing combinations should also be included in the scope of the computer-readable medium.

An embodiment of this application provides a computer program product. The computer program product includes a computer program. When the computer program is run, a computer is enabled to perform the foregoing method.

The embodiments of this application are described with reference to the flowcharts and/or block diagrams of the method, the device (system), and the computer program product according to the embodiments of this application. It should be understood that each procedure and/or block in the flowcharts and/or the block diagrams and a combination of procedures and/or blocks in the flowcharts and/or the block diagrams may be implemented by using computer program instructions. These computer program instructions may be provided to a general-purpose computer, a special-purpose computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, improvement, and the like made based on the technical solutions of the present invention shall fall within the protection scope of the present invention.

## Claims

1. An information transmission method, applied to a terminal device and comprising:
sending related information of conditional handover, wherein the conditional handover is conditional handover with candidate master and secondary cell groups, wherein
the related information comprises condition-related information of an execution condition, the execution condition comprises an execution condition of a candidate primary cell and/or an execution condition of a candidate primary secondary cell, and the condition-related information comprises time-related information when the execution condition is satisfied and/or cell-related information when the execution condition is satisfied.

2. The method according to claim 1, wherein the related information further comprises at least one of the following:
configuration-related information; and
handover-related information.

3. The method according to claim 2, wherein the configuration-related information is used to indicate whether the conditional handover with candidate master and secondary cell groups has been configured for the terminal device.

4. The method according to claim 1, wherein the time-related information comprises at least one of the following:
a moment at which or a time period in which the execution condition of the candidate primary cell is satisfied;
a moment at which or a time period in which the execution condition of the candidate primary secondary cell is satisfied;
duration for which the execution condition of the candidate primary cell has been satisfied;
duration for which the execution condition of the candidate primary secondary cell has been satisfied;
a time difference between satisfaction of a first execution condition and a second execution condition, wherein the first execution condition is the execution condition of the candidate primary cell, and the second execution condition is the execution condition of the candidate primary secondary cell; and
satisfaction order information of the first execution condition and the second execution condition.

5. The method according to claim 4, wherein the duration for which the execution condition has been satisfied is at least one of the following:
duration between the moment at which the execution condition is satisfied and a moment at which a link failure occurs;
duration between the moment at which the execution condition is satisfied and a moment at which the terminal device sends the related information to a network device; or
duration between the moment at which the execution condition is satisfied and a moment at which the conditional handover starts to be performed.

6. The method according to claim 4, wherein the satisfaction order information comprises at least one of the following:
related information of a first triggered execution condition;
related information of a second triggered execution condition;
a first identifier, wherein the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and
a second identifier, wherein the second identifier is used to indicate that the moment at which the first execution condition is satisfied is later than the moment at which the second execution condition is satisfied, or the time period in which the firstexecution condition is satisfied is later than the time period in which the second execution condition is satisfied.

7. The method according to claim 1, wherein the cell-related information comprises at least one of the following:
first indication information, wherein the first indication information is used to indicate whether an execution condition of a candidate primary cell is satisfied, and/or whether an execution condition of a candidate primary secondary cell is satisfied;
second indication information, wherein the second indication information is used to indicate whether an execution condition of a candidate cell pair is satisfied, the candidate cell pair comprises a candidate primary cell and a candidate primary secondary cell corresponding to the candidate primary cell, and the execution condition of the candidate cell pair comprises an execution condition of the candidate primary cell and an execution condition of the candidate primary secondary cell;
cell pair information of a first candidate cell pair, wherein an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied;
primary cell information of a candidate primary cell whose execution condition is satisfied, wherein the primary cell information comprises at least one of the following: an index of the candidate primary cell or the execution condition of the candidate primary cell;
primary secondary cell information of a candidate primary secondary cell whose execution condition is satisfied, wherein the primary secondary cell information comprises at least one of the following: an index of the candidate primary secondary cell or the execution condition of the candidate primary secondary cell;
an execution condition of a candidate primary cell and an execution condition of a candidate primary secondary cell in a second candidate cell pair, wherein the execution conditions of the candidate primary cell and the candidate primary secondary cell in the second candidate cell pair are separately satisfied; and
transmission configuration indicator state TCI state-related information.

8. The method according to claim 7, wherein the cell pair information comprises at least one of the following:
an index and/or an execution condition of a cell whose execution condition is satisfied in the first candidate cell pair; and
an index and/or an execution condition of a cell whose execution condition is not satisfied in the first candidate cell pair.

9. The method according to claim 2, wherein the handover-related information comprises at least one of the following:
a handover result, wherein the handover result is used to indicate a handover success or a handover failure;
an index of a candidate primary cell and an index of a candidate primary secondary cell in a second candidate cell pair, wherein execution conditions of the candidate primary cell and the candidate primary secondary cell in the second candidate cell pair are separately satisfied;
a measurement result, wherein the measurement result comprises at least one of the following: a measurement result of a serving cell, a measurement result of a neighboring cell, or a measurement result of a candidate cell; and
timer information of a first timer, wherein the timer information comprises at least one of the following: remaining duration of the first timer, elapsed running duration of the first timer, and a ratio of the remaining duration to total duration of the first timer.

10. The method according to any one of claims 1-9, wherein the method further comprises:
sending a device capability of the terminal device, wherein the device capability comprises a first capability and/or a second capability, wherein
the first capability is used to indicate a link failure reporting capability of the terminal device in the conditional handover scenario; and
the second capability is used to indicate a handover result reporting capability of the terminal device in the conditional handover scenario.

11. The method according to any one of claims 1-10, wherein the method further comprises:
recording the related information based on first configuration information and/or predefined information.

12. The method according to claim 11, wherein the first configuration information comprises at least one of the following:
a recording period;
a recording start moment;
a recording end moment; and
timer information of a second timer.

13. The method according to claim 11, wherein the predefined information is used to indicate at least one of the following:
recording the related information between receiving the first configuration information and receiving a reporting indication, wherein the reporting indication is used to indicate the terminal device to send the related information; and
recording the related information between receiving two adjacent reporting indications.

14. The method according to any one of claims 1-13, wherein the method further comprises:
sending third indication information, wherein the third indication information is used to indicate whether the related information exists in the terminal device.

15. The method according to claim 14, wherein the sending third indication information comprises:
sending a first message, wherein the first message comprises the third indication information, wherein
the first message comprises at least one of the following: a radio resource control RRC setup complete message, an RRC reconfiguration complete message, and an RRC resume complete message.

16. The method according to any one of claims 1-15, wherein the sending related information of conditional handover comprises:
receiving a reporting indication, and sending the related information based on the reporting indication;
sending the related information when a preconfigured trigger condition is satisfied; or
sending the related information based on a preset period.

17. The method according to claim 16, wherein the trigger condition comprises at least one of the following:
start duration of the second timer is greater than or equal to a preset threshold; and
a radio link failure occurs.

18. An information transmission method, applied to a network device and comprising:
receiving related information of conditional handover, wherein the conditional handover is conditional handover with candidate master and secondary cell groups, wherein
the related information comprises condition-related information of an execution condition, the execution condition comprises an execution condition of a candidate primary cell and/or an execution condition of a candidate primary secondary cell, and the condition-related information comprises time-related information when the execution condition is satisfied and/or cell-related information when the execution condition is satisfied.

19. The method according to claim 18, wherein the related information further comprises at least one of the following:
configuration-related information; and
handover-related information.

20. The method according to claim 19, wherein the configuration-related information is used to indicate whether the conditional handover with candidate master and secondary cell groups has been configured for a terminal device.

21. The method according to claim 18, wherein the time-related information comprises at least one of the following:
a moment at which or a time period in which the execution condition of the candidate primary cell is satisfied;
a moment at which or a time period in which the execution condition of the candidate primary secondary cell is satisfied;
duration for which the execution condition of the candidate primary cell has been satisfied;
duration for which the execution condition of the candidate primary secondary cell has been satisfied;
a time difference between satisfaction of a first execution condition and a second execution condition, wherein the first execution condition is the execution condition of the candidate primary cell, and the second execution condition is the execution condition of the candidate primary secondary cell; and
satisfaction order information of the first execution condition and the second execution condition.

22. The method according to claim 21, wherein the duration for which the execution condition has been satisfied is at least one of the following:
duration between the moment at which the execution condition is satisfied and a moment at which a link failure occurs;
duration between the moment at which the execution condition is satisfied and a moment at which a terminal device sends the related information to the network device; or
duration between the moment at which the execution condition is satisfied and a moment at which the conditional handover starts to be performed.

23. The method according to claim 21, wherein the satisfaction order information comprises at least one of the following:
related information of a first triggered execution condition;
related information of a second triggered execution condition;
a first identifier, wherein the first identifier is used to indicate that a moment at which the first execution condition is satisfied is earlier than a moment at which the second execution condition is satisfied, or a time period in which the first execution condition is satisfied is earlier than a time period in which the second execution condition is satisfied; and
a second identifier, wherein the second identifier is used to indicate that the moment at which the first execution condition is satisfied is later than the moment at which the second execution condition is satisfied, or the time period in which the first execution condition is satisfied is later than the time period in which the second execution condition is satisfied.

24. The method according to claim 18, wherein the cell-related information comprises at least one of the following:
first indication information, wherein the first indication information is used to indicate whether an execution condition of a candidate primary cell is satisfied, and/or whether an execution condition of a candidate primary secondary cell is satisfied;
second indication information, wherein the second indication information is used to indicate whether an execution condition of a candidate cell pair is satisfied, the candidate cell pair comprises a candidate primary cell and a candidate primary secondary cell corresponding to the candidate primary cell, and the execution condition of the candidate cell pair comprises an execution condition of the candidate primary cell and an execution condition of the candidate primary secondary cell;
cell pair information of a first candidate cell pair, wherein an execution condition of a candidate primary cell in the first candidate cell pair is satisfied, and an execution condition of a candidate primary secondary cell is not satisfied; or an execution condition of a candidate primary cell in the first candidate cell pair is not satisfied, and an execution condition of a candidate primary secondary cell is satisfied;
primary cell information of a candidate primary cell whose execution condition is satisfied, wherein the primary cell information comprises at least one of the following: an index of the candidate primary cell or the execution condition of the candidate primary cell;
primary secondary cell information of a candidate primary secondary cell whose execution condition is satisfied, wherein the primary secondary cell information comprises at least one of the following: an index of the candidate primary secondary cell or the execution condition of the candidate primary secondary cell;
an execution condition of a candidate primary cell and an execution condition of a candidate primary secondary cell in a second candidate cell pair, wherein the execution conditions of the candidate primary cell and the candidate primary secondary cell in the second candidate cell pair are separately satisfied; and
transmission configuration indicator state TCI state-related information.

25. The method according to claim 24, wherein the cell pair information comprises at least one of the following:
an index and/or an execution condition of a cell whose execution condition is satisfied in the first candidate cell pair; and
an index and/or an execution condition of a cell whose execution condition is not satisfied in the first candidate cell pair.

26. The method according to claim 19, wherein the handover-related information comprises at least one of the following:
a handover result, wherein the handover result is used to indicate a handover success or a handover failure;
an index of a candidate primary cell and an index of a candidate primary secondary cell in a second candidate cell pair, wherein execution conditions of the candidate primary cell and the candidate primary secondary cell in the second candidate cell pair are separately satisfied;
a measurement result, wherein the measurement result comprises at least one of the following: a measurement result of a serving cell, a measurement result of a neighboring cell, or a measurement result of a candidate cell; and
timer information of a first timer, wherein the timer information comprises at least one of the following: remaining duration of the first timer, elapsed running duration of the first timer, and a ratio of the remaining duration to total duration of the first timer.

27. The method according to any one of claims 18-26, wherein the method further comprises:
receiving a device capability of the terminal device, wherein the device capability comprises a first capability and/or a second capability, wherein
the first capability is used to indicate a link failure reporting capability of the terminal device in the conditional handover scenario; and
the second capability is used to indicate a handover result reporting capability of the terminal device in the conditional handover scenario.

28. The method according to any one of claims 18-27, wherein the related information is obtained through recording based on first configuration information and/or predefined information.

29. The method according to claim 28, wherein the first configuration information comprises at least one of the following:
a recording period;
a recording start moment;
a recording end moment; and
timer information.

30. The method according to claim 28, wherein the predefined information is used to indicate at least one of the following:
recording the related information between receiving the first configuration information and receiving a reporting indication, wherein the reporting indication is used to indicate the terminal device to send the related information; and
recording the related information between receiving two adjacent reporting indications.

31. The method according to any one of claims 18-30, wherein the method further comprises:
receiving third indication information, wherein the third indication information is used to indicate whether the related information exists in the terminal device.

32. The method according to claim 31, wherein the method further comprises:
receiving a first message, wherein the first message comprises the third indication information, wherein
the first message comprises at least one of the following: a radio resource control RRC setup complete message, an RRC reconfiguration complete message, and an RRC resume complete message.

33. The method according to any one of claims 18-32, before the receiving related information of conditional handover, further comprising:
sending a reporting indication, wherein the reporting indication is used to indicate to send the related information.

34. A terminal device, comprising a processor and a memory, wherein
the memory stores computer-executable instructions; and
the processor executes the computer-executable instructions stored in the memory, to enable the terminal device to perform the method according to any one of claims 1-17.

35. A network device, comprising a processor and a memory, wherein
the memory stores computer-executable instructions; and
the processor executes the computer-executable instructions stored in the memory, to enable the network device to perform the method according to any one of claims 18-33.
